# EUROPÄISCHE PATENTSCHRIFT

(11) **EP 1 674 907 B1**
(45) Veröffentlichungstag und Bekanntmachung des Hinweises auf die Patenterteilung: **24.10.2007**
(21) Anmeldenummer: 05026679.0
(22) Anmeldetag: 07.12.2005
(51) Int. Cl.: G02B 6/38, G02B 6/44

(54) **Stecker für Lichtwellenleiter**
Plug for optical fibre
Fiche mâle pour guide optique

(30) Priorität: 22.12.2004 DE 202004020043 U
(43) Veröffentlichungstag der Anmeldung: 28.06.2006
(73) Patentinhaber: CCS Technology, Inc., Wilmington, DE 19803 (US)
(72) Erfinder: Lapp, Oliver Dipl-Ing., 42399 Wuppertal (DE); Zimmer, Rainer, Dipl.Ing, 58579 Schalksmühle (DE); Bai, Keith Sullivan BA, 14050 Berlin (DE)
(74) Vertreter: Sturm, Christoph

(56) Entgegenhaltungen:
- EP-A- 0 207 373
- EP-A- 0 443 454
- EP-A- 0 928 978
- EP-A- 1 130 433
- EP-A- 1 258 759
- WO-A-20/04061503
- DE-U1- 8 221 983
- US-A- 4 445 753
- US-A- 5 276 750
- US-A1- 2002 186 931
- US-A1- 2004 017 982
- PATENT ABSTRACTS OF JAPAN Bd. 2000, Nr. 19, 5. Juni 2001 (2001-06-05) & JP 2001 033658 A (SEIKO INSTRUMENTS INC), 9. Februar 2001 (2001-02-09)

## Beschreibung

Die Erfindung betrifft einen Stecker für Lichtwellenleiter nach dem Oberbegriff des Anspruchs 1.

In Verteilerschränken für Lichtwellenleiterkabel kommen Anschlusseinrichtungen und/oder Verteilereinrichtungen zum Einsatz, wie sie zum Beispiel aus dem Produktkatalog "Zubehör für LWL-Kabelnetze, Ausgabe 2, Seiten 226 und 227, Jahr 2002, Corning Cable Systems GmbH & Co. KG" bekannt sind. Die dort gezeigten Lichtwellenleiterverteilereinrichtungen dienen insbesondere der Handhabung von mit Steckern vorkonfektionierten Lichtwellenleitern, wie z.B. Patchcords oder Pigtails, wobei dieselben an einer Vorderseite ein Panel aufweisen, in welches steckertypabhängige Kupplungen eingesetzt werden. Das Panel bildet ein Trägerelement für die Kupplungen und wird auch als Schaltfeld oder Rangierfeld bezeichnet.

Die aus dem Stand der Technik bekannten Kupplungen, die in Öffnungen eines Trägerelements bzw. Panels einer Lichtwellenleiteranschlusseinrichtung bzw. einer Lichtwellenleiterverteilereinrichtung Aufnahme finden, sind mehrteilig ausgeführt, wobei äußere Kupplungshälften der Kupplungen durch Schweißen miteinander verbunden werden. In die äußeren Kupplungshälften der aus dem Stand der Technik bekannten Kupplungen wird vor dem Verschweißen eine Zentrierungsbuchse eingesetzt, die der exakten Ausrichtung von zwei Steckern dient, die in den Kupplungen Aufnahme finden. Die aus dem Stand der Technik bekannten Lichtwellenleiteranschlusseinrichtungen bzw. die Kupplungen derselben verfügen über einen komplexen Aufbau und erfordern einen hohen Montageaufwand. Gleiches gilt für die Stecker, die in den Kupplungen Aufnahme finden.

Die DE-U-8221983 offenbart einen Stecker mit kugelgelenkartig gelagerter Ferrule, die federnd gelagert ist.

Ein Stecker für Lichtwellenleiter nach dem Oberbegriff des Anspruchs 1 ist aus der EP-A-0207373 und aus der EP-A-0443454 bekannt. Diese beiden Dokumente offenbaren Stecker mit ungefedert gelagerten Ferrulen.

Hiervon ausgehend liegt der vorliegenden Erfindung das Problem zu Grunde, einen neuartigen Stecker für Lichtwellenleiter zu schaffen.

Dieses Problem wird durch einen Stecker mit den Merkmalen des Anspruchs 1 gelöst.

Bevorzugte Weiterbildungen der Erfindung er eben sich aus dem Unteranspruch und der nachfolgenden Beschreibung. Ein Ausführungsbeispiel der Erfindung wird, ohne hierauf beschränkt zu sein, anhand der Zeichnung näher erläutert. In der Zeichnung zeigt:
- Fig. 1: eine perspektivische Seitenansicht auf eine Innenseite eines Panels einer Lichtwellenleiterverteilereinrichtung;
- Fig. 2: einen Ausschnitt aus dem Panel der Fig. 1 im Bereich einer Kupplung in einer Ansicht analog zu Fig. 1 auf die Innenseite desselben;
- Fig. 3: einen Ausschnitt aus dem Panel der Fig. 1 im Bereich einer Kupplung in einer perspektivischen Seitenansicht auf eine Außenseite desselben;
- Fig. 4:: eine Vorderansicht auf den Ausschnitt der Fig. 2;
- Fig. 5:: einen Querschnitt durch den Ausschnitt der Fig. 2 bis 4 entlang der Schnittlinie V-V in Fig. 4;
- Fig. 6:: einen Querschnitt durch den Ausschnitt der Fig. 2 bis 4 entlang der Schnittlinie VI-VI in Fig. 4;
- Fig. 7:: den Ausschnitt der Fig. 2 zusammen mit einem Stecker und einer Zentrierungsbuchse in einer perspektivischen Seitenansicht auf die Innenseiteseite des Panels;
- Fig. 8:: die Anordnung der Fig. 7 in einer perspektivischen Seitenansicht auf die Außenseiteseite des Panels;
- Fig. 9:: einen Querschnitt durch die Anordnung der Fig. 7 bzw. 8;
- Fig. 10:: eine perspektivische Seitenansicht auf eine Innenseite eines Panels einer weiteren Lichtwellenleiterverteilereinrichtung;
- Fig. 11:: einer perspektivische Seitenansicht einer Kupplung der Anordnung der Fig. 10;
- Fig. 12:: eine weitere perspektivische Seitenansicht der Kupplung der Fig. 11;
- Fig. 13:: einen Querschnitt durch einen Stecker für die Lichtwellenleiterverteilereinrichtung der Fig. 1 bis 9 oder die Lichtwellenleiterverteilereinrichtung der Fig. 10 bis 12;
- Fig. 14:: eine erste Explosionsdarstellung des Steckers der Fig. 13;
- Fig. 15: eine zweite Explosionsdarstellung des Steckers der Fig. 13;
- Fig. 16:: einen Querschnitt durch den Stecker der Fig. 13 bis 15, der von einer Innenseite eines Panels der Fig. 1 bis 9 in eine Kupplung desselben eingesteckt ist;
- Fig. 17:: einen gegenüber Fig. 16 um 90° gedrehten Querschnitt;
- Fig. 18:: die Anordnung der Fig. 16 und 17 zusammen mit einem von der Außenseite des Panels in die Kupplung desselben eingesteckten Standartstecker;
- Fig. 19:: einen Querschnitt durch einen erfindungsgemäßen Stecker nach einem Ausführungsbeispiel der Erfindung für die Lichtwellenleiterverteilereinrichtung der Fig. 1 bis 9 oder die Lichtwellenleiterverteilereinrichtung der Fig. 10 bis 12;
- Fig. 20:: eine erste Explosionsdarstellung des erfindungsgemäßen Steckers der Fig. 19;
- Fig. 21:: eine zweite Explosionsdarstellung des erfindungsgemäßen Steckers der Fig. 19;

- Fig. 22:: einen Querschnitt durch den Stecker der Fig. 19 bis 20, der von einer Innenseite des Panels der Fig. 1 bis 9 in eine Kupplung desselben eingesteckt ist;
- Fig. 23:: einen gegenüber Fig. 16 um 90° gedrehten Querschnitt;
- Fig. 24:: die Anordnung der Fig. 22 und 23 zusammen mit einem von der Außenseite des Panels in die Kupplung desselben eingesteckten Standartstecker;
- Fig. 25:: einen Querschnitt durch einen weiteren Stecker für die Lichtwellenleiterverteilereinrichtung der Fig. 1 bis 9 oder die Lichtwellenleiterverteilereinrichtung der Fig. 10 bis 12;
- Fig. 26:: eine erste Explosionsdarstellung des Steckers der Fig. 25;
- Fig. 27:: eine zweite Explosionsdarstellung des Steckers der Fig. 25;
- Fig. 28:: einen Querschnitt durch den Stecker der Fig. 25 bis 26, der von einer Innenseite des Panels der Fig. 1 bis 9 in eine Kupplung desselben eingesteckt ist;
- Fig. 29:: einen gegenüber Fig. 28 um 90° gedrehten Querschnitt; und
- Fig. 30:: die Anordnung der Fig. 28 und 29 zusammen mit einem von der Außenseite des Panels in die Kupplung desselben eingesteckten Standartstecker.

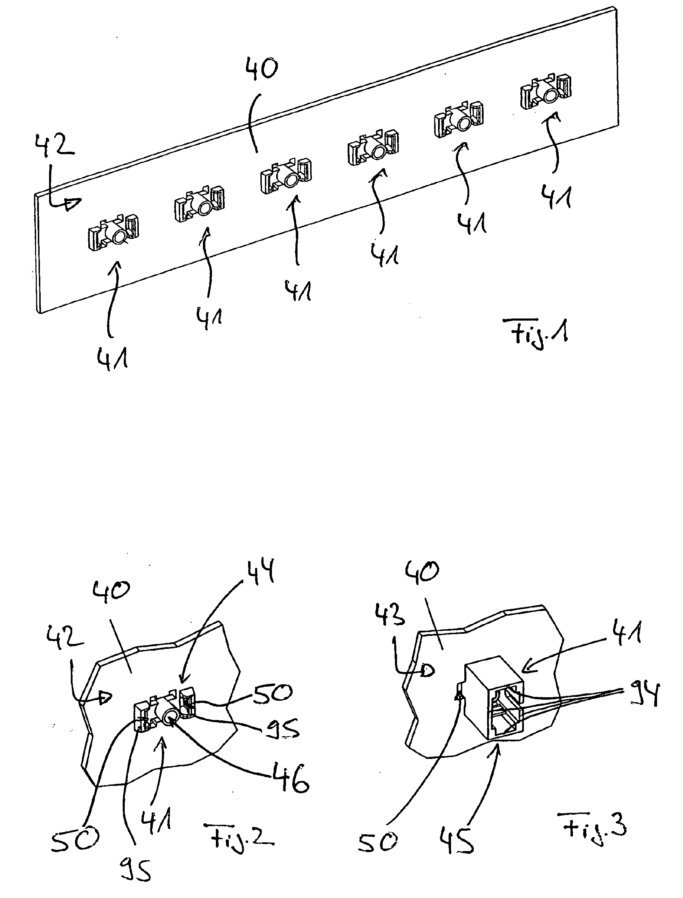

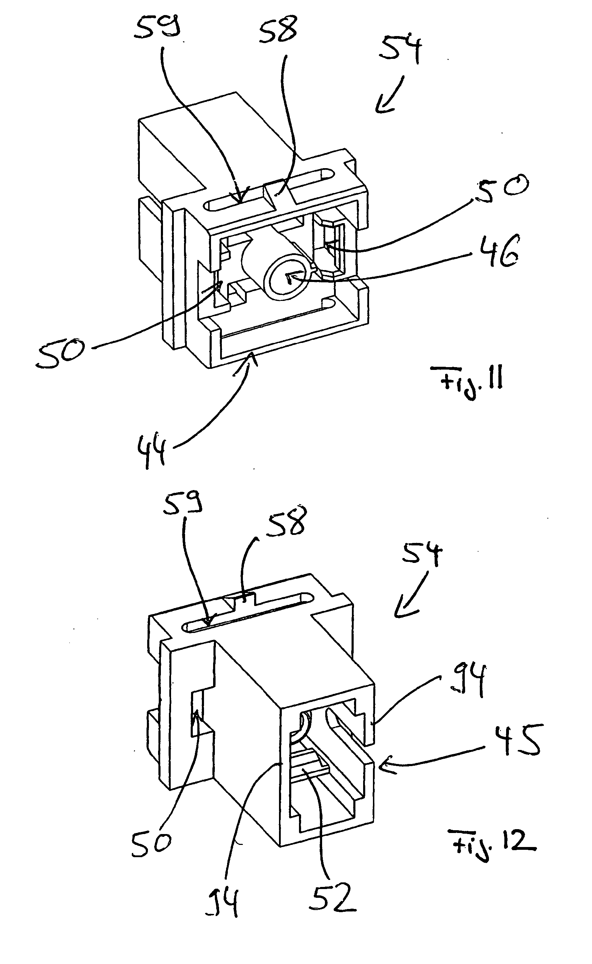

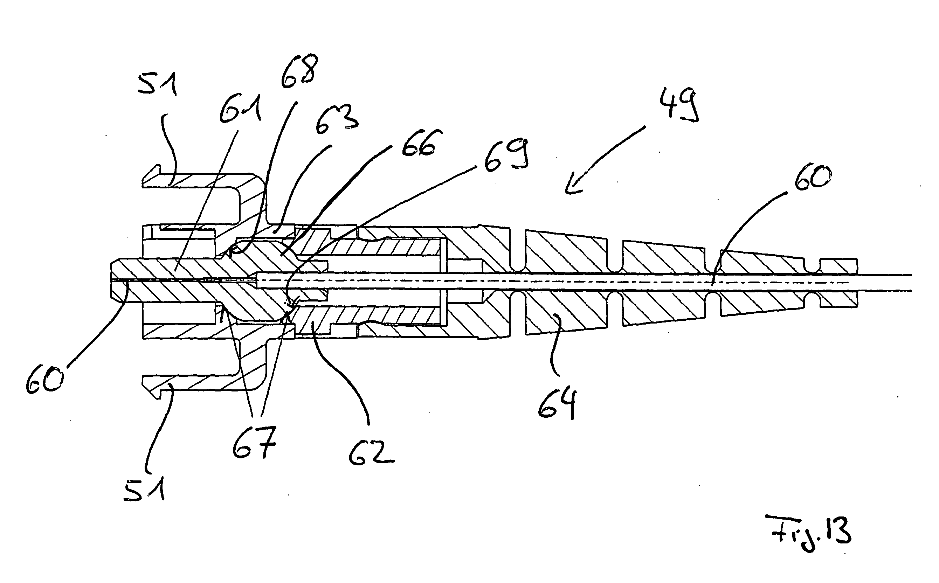

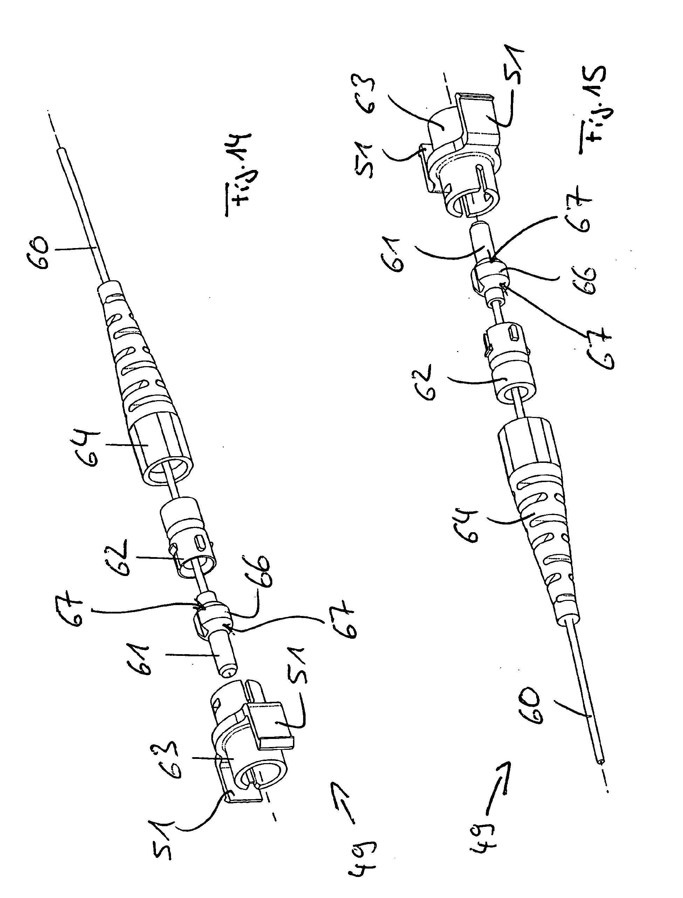

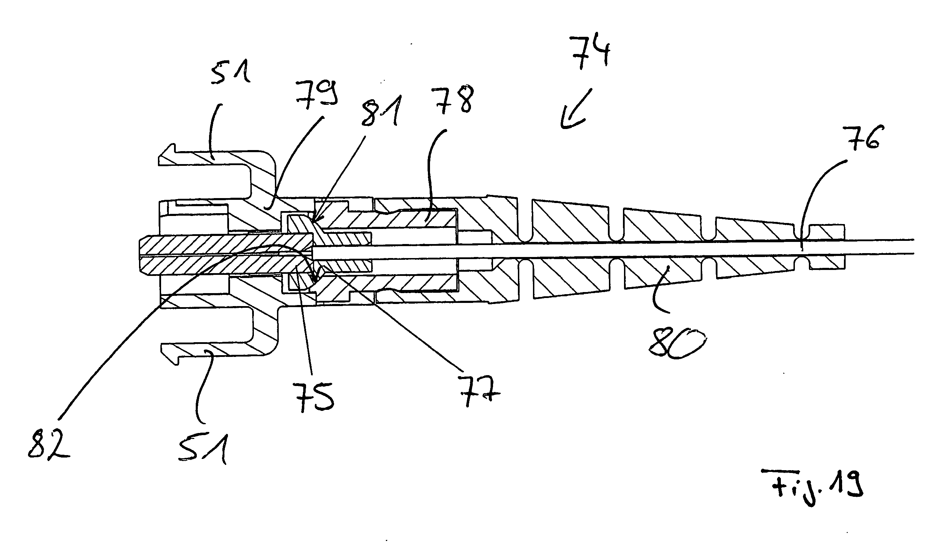

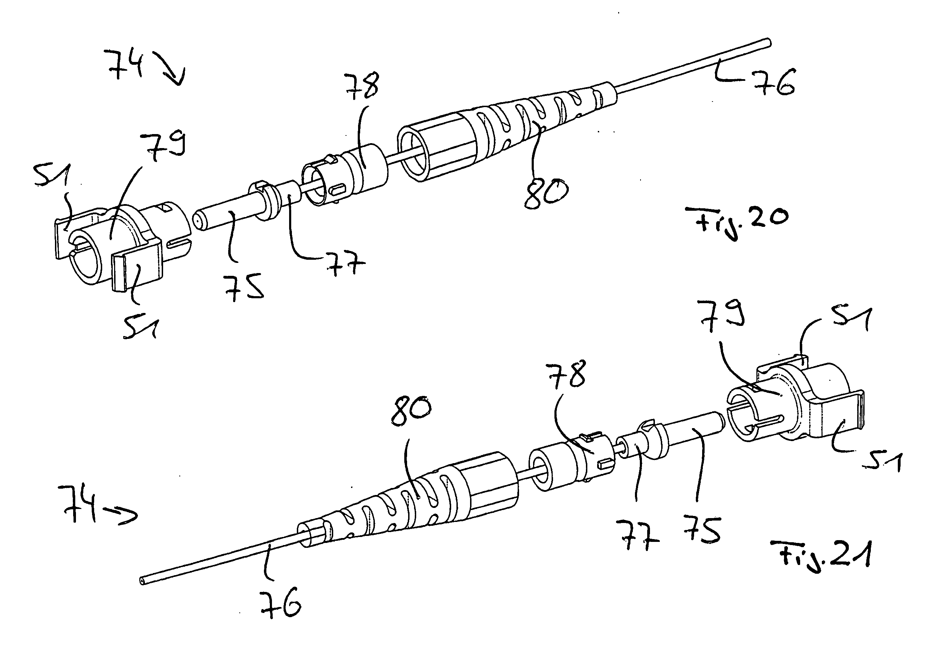

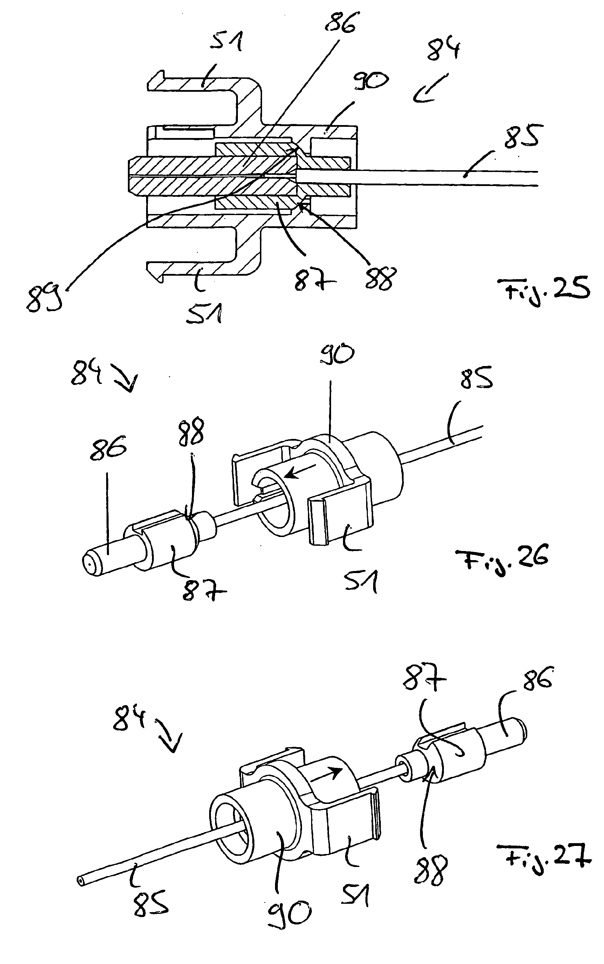

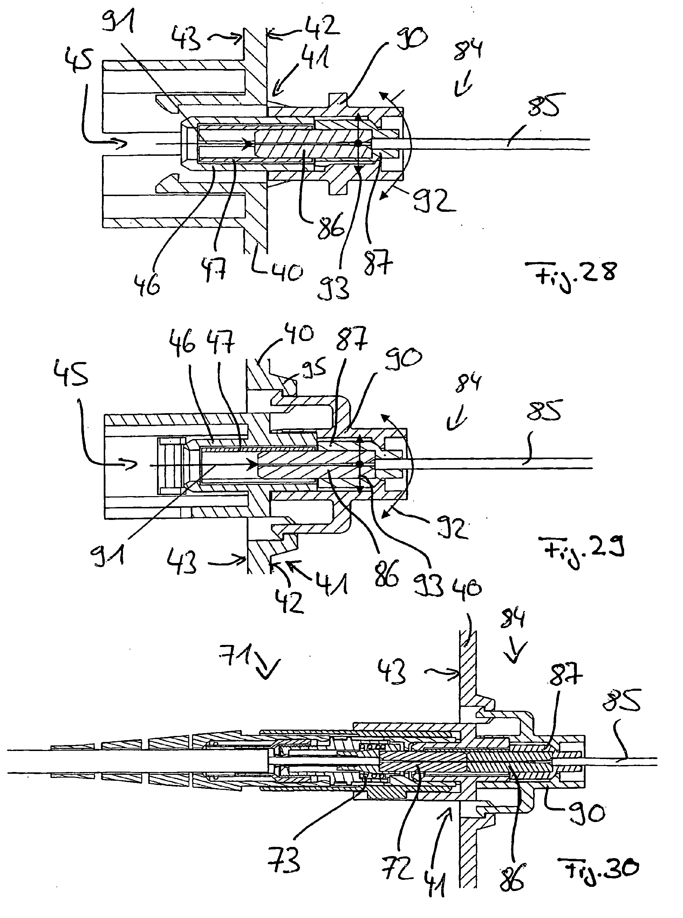

Nachfolgend wird die hier vorliegende Erfindung unter Bezugsnahme auf Fig. 1 bis 30 in größerem Detail beschrieben, wobei sich Fig. 19 bis 24 direkt auf den erfindungsgemäßen Stecker beziehen, während die übrigen Figuren vergleichende Beispiele zeigen.

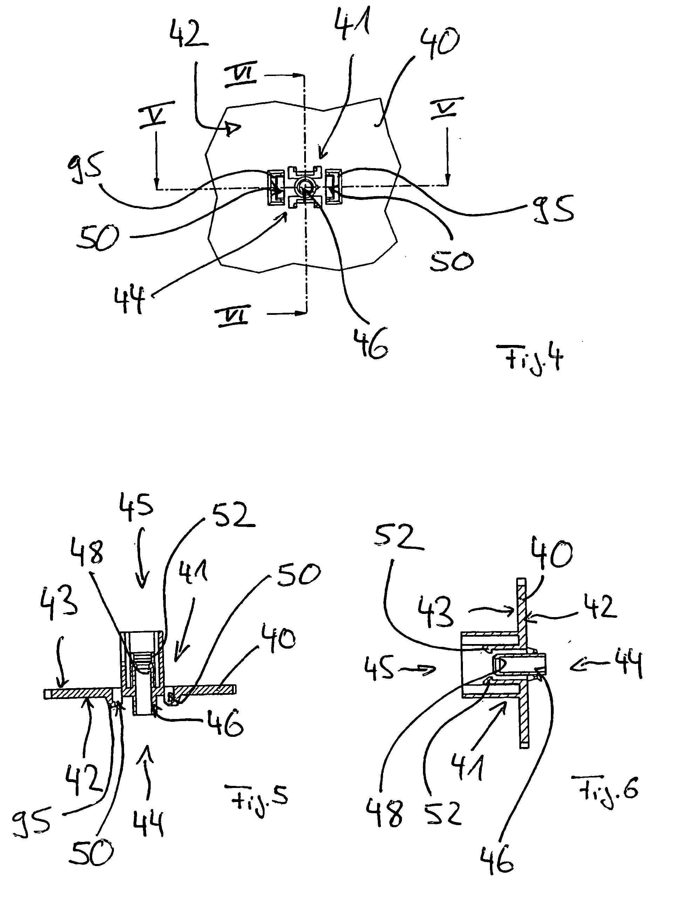

Fig. 1 zeigt ein Panel 40 einer Lichtwellenleiterverteilereinrichtung, wobei ein Panel auch als Schaltfeld oder Rangierfeld bezeichnet wird. Das Panel 40 kann zum Beispiel eine Vorderwand einer im Detail nicht-dargestellten Lichtwellenleiterverteilereinrichtung bilden. In das Panel 40 der Fig. 1 sind insgesamt sechs Kupplungen 41 integriert. Fig. 2 zeigt einen Ausschnitt aus dem Panel 40 der Fig. 1 im Bereich einer solchen Kupplung 41 und zwar in einer Blickrichtung auf eine Innenseite 42 des Panels 40. Fig. 3 zeigt den Ausschnitt der Fig. 2 in Blickrichtung auf eine Außenseite 43 des Panels 40.

Die Kupplungen 41 des Panels 40 sind einteilig ausgebildet. Gemäß Fig. 1 bis 9 sind dieselben des weiteren integraler Bestandteil des Panels 40, die Kupplungen 41 bilden demnach zusammen mit dem Panel 40 eine monolithische Einheit. Die Kupplungen 41 können zusammen mit dem Panel 40 als Spritzgussteil ausgeführt sein.

In die Kupplungen 41 kann von beiden Seiten, also sowohl von der Innenseite 42 als auch von der Außenseite 43 aus, jeweils ein Stecker eines Lichtwellenleiters bzw. Lichtwellenleiterkabels eingesteckt werden. Die Kupplungen 41 verfügen demnach über zwei Kupplungsöffnungen, nämlich eine erste Kupplungsöffnung 44 an der Innenseite 42 des Panels 40 und eine zweite Kupplungsöffnung 45 an der Außenseite 43 desselben. In die an der Innenseite 42 positionierte erste Kupplungsöffnung 44 kann ein erfindungsgemäß ausgebildeter Stecker, auf den weiter unten in größerem Detail eingegangen wird, eingesteckt werden. Die zweite Kupplungsöffnung 45 im Bereich der Außenseite 43 des Panels dient der Aufnahme eines Standardsteckers, in den gezeigten Ausführungsbeispielen der Aufnahme eines sogenannten SC-Steckers

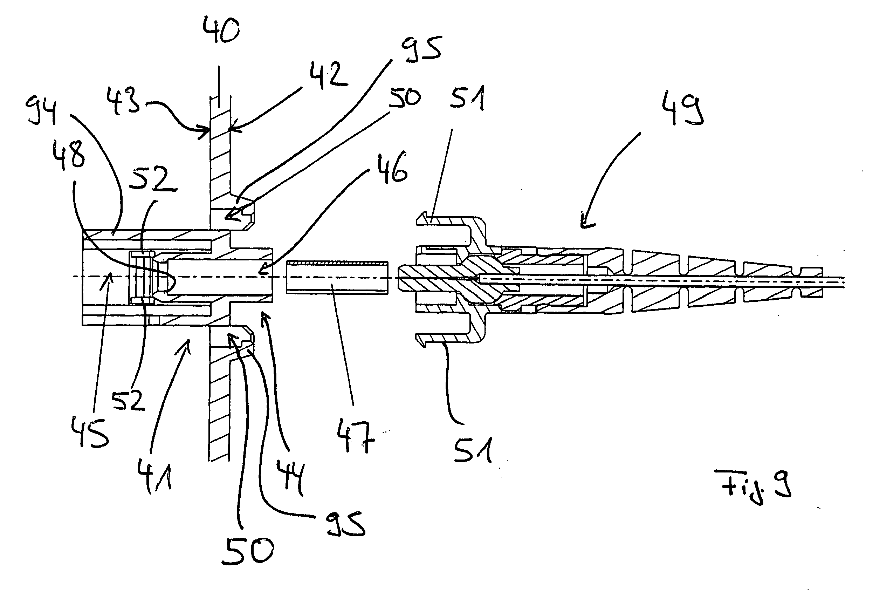

Die einteiligen Kupplungen 41 des Panels 40 verfügen über eine Aufnahme 46 für eine Zentrierungsbuchse 47. Die Aufnahme 46 ist im Bereich der Innenseite 42 des Panels 40 offen ausgebildet und erlaubt an der Innenseite 42 ein ungehindertes Einführen der Zentrierungsbuchse 47 in die Aufnahme 46. Im Bereich der Außenseite 43 des Panels 40 ist die Aufnahme 46 eingeschnürt und bildet hier einen Anschlag 48 für die Zentrierungsbuchse 47. Wie Fig. 7 bis 9 entnommen werden kann, wird vor dem Einstecken eines Steckers 49 in die an der Innenseite 42 des Panels 40 ausgebildete erste Kupplungsöffnung 44 der Kupplung 41 die Zentrierungsbuchse 47 in die Aufnahme 46 eingeführt. Anschließend wird der Stecker 49 in die erste Kupplungsöffnung 44 gesteckt und an der Kupplung 41 verrastet, wobei hierdurch einerseits die Zentrierungsbuchse 47 und andererseits der Stecker 49 im Bereich der Kupplung 41 fixiert werden.

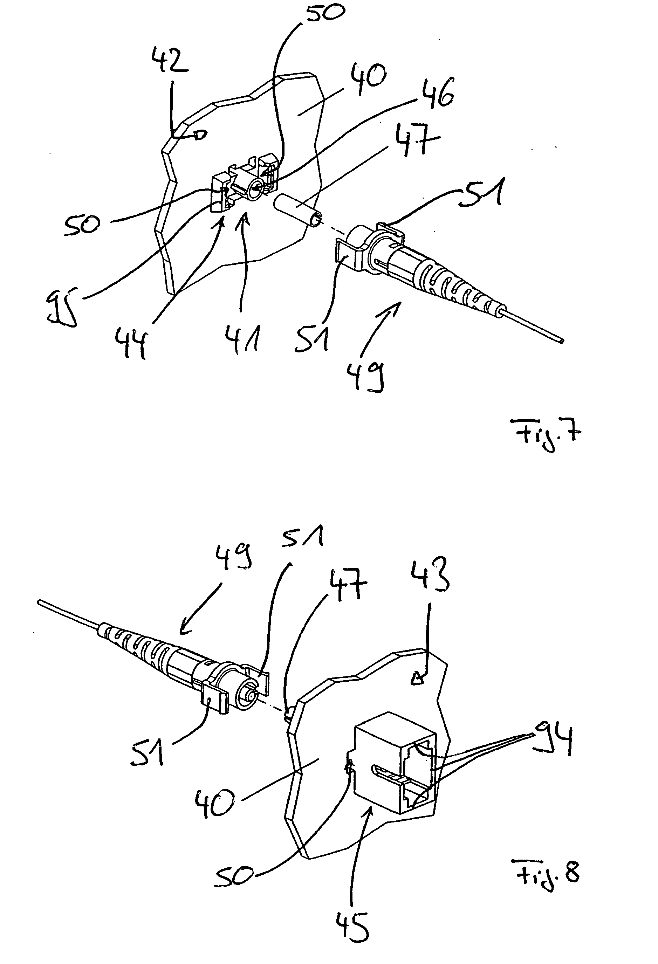

Zur Fixierung des Steckers 49 an der Innenseite 42 des Panels 40 im Bereich einer Kupplung 41 verfügen die Kupplungen 41 über Rastelemente 50, die mit Rastelementen 51 des Steckers 49 zusammenwirken. Die Rastelemente 51 des Steckers 49 sind als widerhakenartige Verankerungselemente ausgebildet, die in die als Öffnungen bzw. Ausnehmungen ausgebildeten Rastelemente 50 auf der Innenseite 42 des Panels 40 einschnappen. Wie insbesondere Fig. 5, 6 und 9 entnommen werden kann, liegen die Rastelemente 50 und 51 zur Fixierung des Steckers 49 und damit der Zentrierungsbuchse 47 an der Innenseite 42 des Panels 40 außerhalb eines Kupplungsbereichs für den Standardstecker an der Außenseite 43 des Panels 40. Der Kupplungsbereich für einen SC-Standardstecker wird durch Rastelemente 52 und Führungen 94 definiert. Die als Öffnungen bzw. Ausnehmungen ausgebildeten Rastelemente 50 liegen demnach seitlich neben den Rastelementen 52 und Führungen 94 für den Standardstecker.

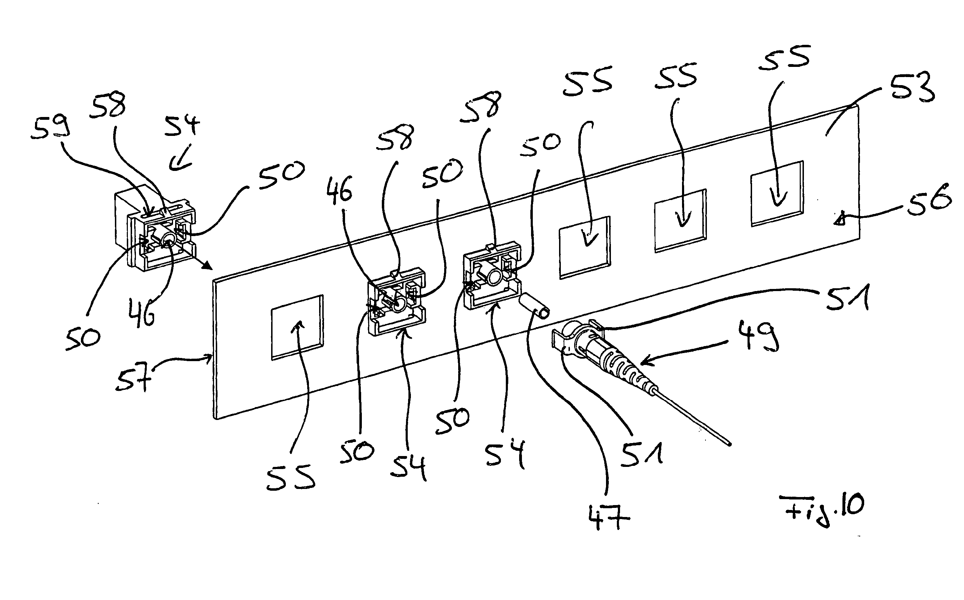

Wie bereits erwähnt, sind gemäß Fig. 1 bis 9 die Kupplungen 41 integraler Bestandteil des Panels 40. Im Unterschied hierzu zeigen Fig. 10 bis 12 ein Panel 53 einer Lichtwellenleiterverteilereinrichtung, bei welcher Kupplungen 54 in Öffnungen 55 innerhalb eines Panels 53 eingerastet sind. Die Kupplungen 54 sind wiederum einteilig ausgebildet und bilden im Bereich einer Innenseite 56 des Panels 53 die erste Kupplungsöffnung 44 und im Bereich einer Außenseite 57 des Panels 53 die zweite Kupplungsöffnung 45. Die Kupplungen 54 des Ausführungsbeispiels der Fig. 10 bis 12 stimmen hinsichtlich ihres Aufbaus sowie ihrer Funktionsweise mit den Kupplungen 41 gemäß Fig. 1 bis 9 überein, sodass zur Vermeidung unnötiger Wiederholungen für gleiche Baugruppen gleiche Bezugziffern verwendet werden.

Der einzige Unterschied besteht wie bereits erwähnt darin, dass gemäß der Fig. 10 bis 12 die Kupplungen 54 in Öffnungen 55 innerhalb des Panels 53 eingerastet werden, wobei hierzu die Kupplungen 54 Rastnasen 58 aufweisen, die beim Einführen der Kupplungen 54 in die Öffnungen 55 des Panels 53 widerhakenartig in das Panel 53 einschnappen. Zu Gewährleistung dieser Einschnappbewegung sind benachbart zu den Rastnasen 58 in die Kupplungen 54 Aussparungen 59 integriert, die eine elastische Verformbarkeit der Rastnasen 58 im Sinne der oben beschriebenen Einschnappbewegung ermöglichen.

Nachfolgend wird unter Bezugnahme auf Fig. 13 bis 18 der bereits in Fig. 7, 8, 9 und 10 gezeigte Stecker 49 eines vorkonfektionierten Lichtwellenleiters 60 beschrieben.

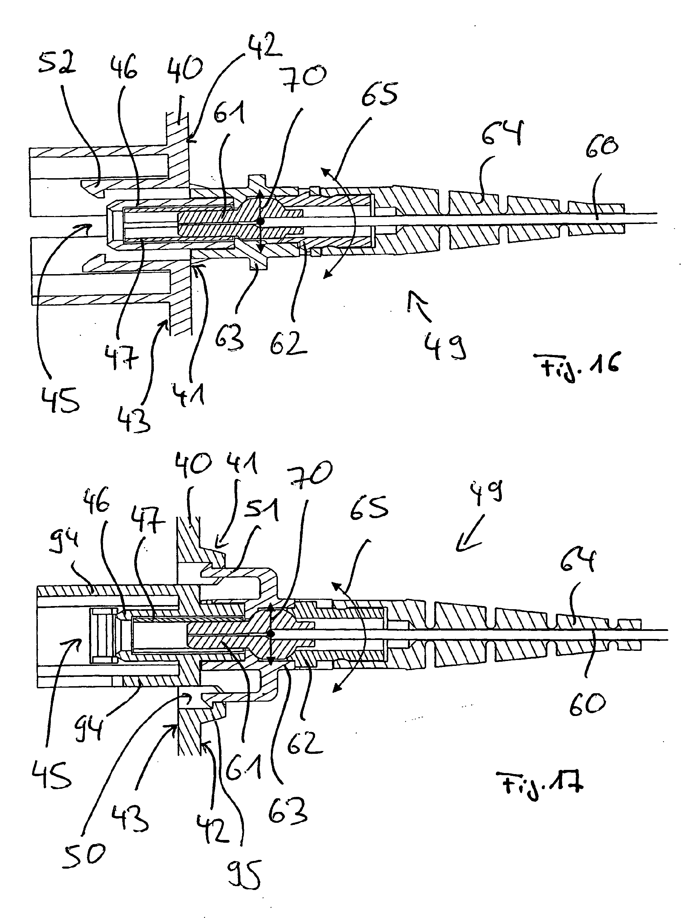

Einem freien Ende des Lichtwellenleiters 60 ist eine Ferrule 61 zugeordnet, wobei im Bereich der Ferrule 61 der Lichtwellenleiter 60 von seiner Schutzhülle befreit und demnach entmantelt ist. Gemäß Fig. 13 bis 18 umfasst der Stecker 49 neben der Ferrule 61, die dem freien Ende des Lichtwellenleiters 60 zugeordnet ist, ein Ferrulengegenlager 62, ein Steckergehäuse 63 und eine Knickschutzhülle 64, wobei die Ferrule 61 des Lichtwellenleiters 60 im Steckergehäuse 63 ungefedert bzw. federlos gelagert ist. Zum Ausgleich von Schrägstellungen infolge von auf den Stecker 49 einwirkenden Querkräften ist die Ferrule 61 im Steckergehäuse 63 kugelgelenkartig gelagert. Die auf den Stecker 49 einwirkenden Querkräfte sind in Fig. 16 und 17 durch Doppelpfeile 65 visualisiert.

Gemäß Fig. 13 bis 18 wird die kugelgelenkartige Lagerung der Ferrule 61 im Steckergehäuse 63 dadurch realisiert, dass die Ferrule 61 über eine Aufdickung 66 verfügt, wobei die Aufdickung 66 zwei kalottenartige Flächen 67 bildet. Die beiden kalottenartigen Flächen 67 der Aufdickung 66 der Ferrule 61 wirken mit zwei komplementär gewölbten Flächen zusammen, nämlich mit einer ersten komplementär gewölbten Fläche 68 des Steckergehäuses 63 und einer zweiten komplementär gewölbten Fläche 69 des Ferrulengegenlagers 62. Auf diese Weise wird eine kugelgelenkartige Lagerung der Ferrule 61 sowohl am Steckergehäuse 63 als auch am Ferrulengegenlager 62 des Steckers 49 realisiert. Wirken bei einem in eine Kupplung 41 eingesteckten Stecker 49 auf denselben im Sinne der Doppelpfeile 65 (siehe Fig. 16 und 17) Querkräfte ein, so kann die Ferrule 61 aufgrund der kugelgelenkartigen bzw. kalottenförmigen Lagerung eine leichte Schwenkbewegung ausführen. Dabei entsteht eine durch die Doppelpfeile 70 visualisierte Seitwärtsbewegung der Ferrule 61, die durch das Spiel zwischen der Zentrierungsbuchse 47 und der Aufnahme 46 für die Zentrierungsbuchse 47 ausgeglichen werden kann. Die Zentrierungsbuchse 47 ist, wie insbesondere Fig. 16 entnommen werden kann, in Längsrichtung geschlitzt.

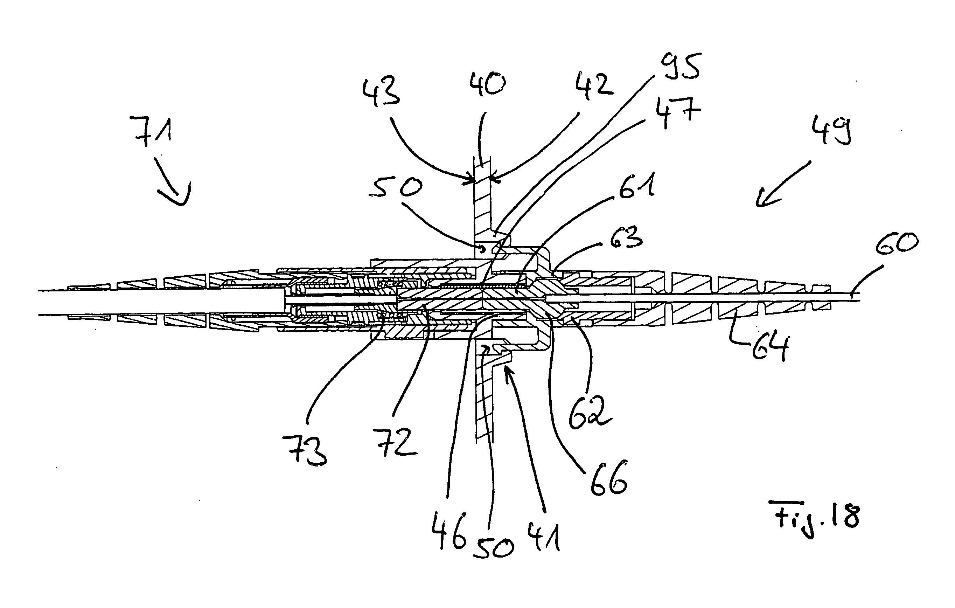

Fig. 18 zeigt den Stecker 49 der Fig. 13 bis 17 in einer in die Kupplung 41 von der Innenseite 42 des Panels 40 aus eingesteckten Position, zusammen mit einem von der Außenseite 43 des Panels 40 aus eingesteckten Standardstecker 71. Bei dem Standardstecker 71 der Fig. 18 handelt sich es sich um einen sogenannten SC-Stecker, in welchem eine Ferrule 72 über ein Federelement 73 federnd gelagert ist. Der Aufbau des Standardsteckers 71 ist dem hier angesprochenen Fachmann geläufig und bedarf daher keiner näheren Erläuterung. In der in Fig. 18 gezeigten Montageposition, in welcher sowohl der Stecker 49 als auch der Standardstecker 41 in eine Kupplung 41 des Panels 40 einer Lichtwellenleiterverteilereinrichtung eingesteckt sind, sind beide Ferrulen 61 und 72 der beiden Stecker 49 und 71 in der Zentrierungsbuchse 47 geführt, wobei das Federelement 72 des Standardsteckers 71 die Ferrule 72 des Standardsteckers 71 gegen die Ferrule 61 des Steckers 49 und damit die kalottenförmige Fläche 67 der Ferrule 61 gegen die komplementär gewölbte Fläche 69 des Ferrulengegenlagers 62 drückt. Hierdurch werden die beiden Ferrulen 61 sowie 72 der beiden Stecker 49 und 61 exakt zueinander ausgerichtet, um so die in den Ferrulen geführten Lichtwellenleiter zur Gewährleistung einer minimalen Dämpfung exakt zueinander zu positionieren.

Wie insbesondere Fig. 13 entnommen werden kann, steht ein freies Ende der Ferrule 61 gegenüber den Rastelementen 51 des Steckergehäuses 63 vor. Hierdurch ist gewährleistet, dass die Ferrule 61 des fertig montierten Steckers 49 z. B. durch Schleifen bearbeitet werden kann. Um dennoch ein wiederhakenartiges Einrasten der Rastelemente 51 des Steckergehäuses 63 in die als Öffnungen ausgebildeten Rastelemente 50 des Panels 40 zu ermöglichen, verfügt das Panel 40 an der Innenseite 42 über Vorsprünge 95, die zusammen mit den Rastelementen 51 des Steckergehäuses 63 die Rastverbindung zwischen Kupplung 41 bzw. Panel 40 und Stecker 49 gewährleisten.

Ein Ausführungsbeispiel eines erfindungsgemäßen Steckers 74 zeigen Fig. 19 bis 24. Dieser Stecker 74 verfügt wiederum über eine Ferrule 75 für einen Lichtwellenleiter 76, wobei die Ferrule 75 des Steckers gemäß Fig. 19 bis 24 als zylindrische Standardferrule ausgebildet ist. Die Ferrule 75 des Steckers 74 ist in einer Ferrulenhalterung 77 aufgenommen, wobei die Ferrule 75 über die Ferrulenhalterung 77 in einem Ferrulengegenlager 78 des Steckers 74 federlos und kugelgelenkartig gelagert ist. Weitere Baugruppen des Steckers 74 gemäß Fig. 19 bis 24 sind wiederum ein Steckergehäuse 79 sowie eine Knickschutzhülle 80, wobei das Steckergehäuse 79 und die Knickschutzhülle 80 des Steckers 74 gemäß Fig. 19 bis 24 dem Steckergehäuse 63 sowie der Knickschutzhülle 64 des Steckers 49 gemäß Fig. 13 bis 18 entsprechen.

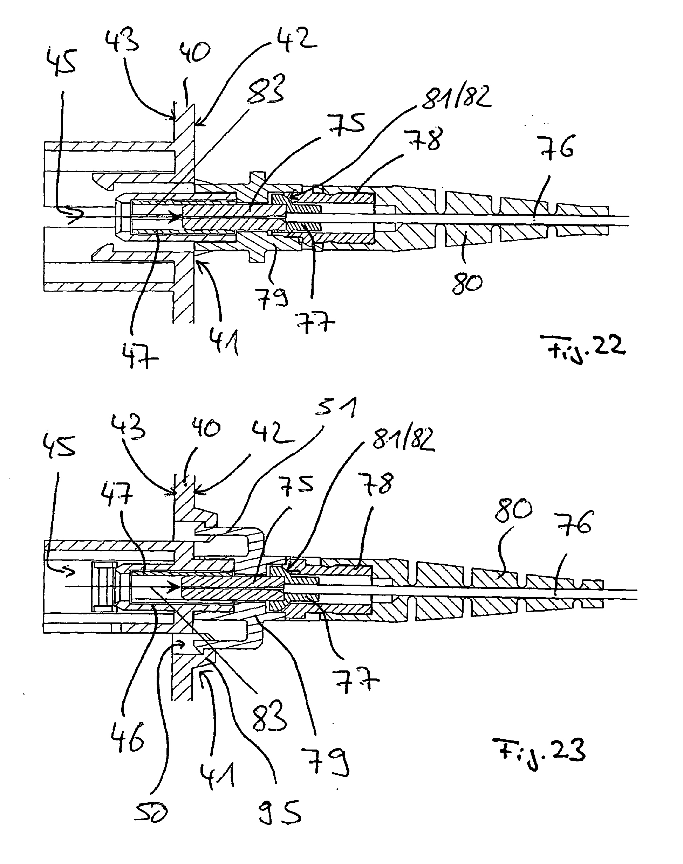

Gemäß Fig. 19 bis 24 verfügt die Ferrulenhalterung 77 über eine kalottenartige Fläche 81, die mit einer komplementär gewölbten Fläche 82 des Ferrulengegenlagers 78 zusammenwirkt und eine kugelgelenkartige Lagerung der Ferrule 75 bereitstellt. Beim Stecker 74 gemäß Fig. 19 bis 24 ist im Unterschied zum Stecker 49 gemäß Fig. 13 bis 18 lediglich eine kalottenförmige Auflage im Bereich einer Rückseite der Ferrule 75 vorhanden. In dem Zustand, in dem der Stecker 74 von der Innenseite 42 her in die erste Kupplungsöffnung 44 der Kupplung 41 des Panels 40 und ein Standardstecker 71 von der Außenseite 43 her in die zweite Kupplungsöffnung 45 eingeschoben ist, drückt im Sinne des Pfeils 83 (siehe Fig. 22 und 23) das Federelement 73 des Standardsteckers 71 die Ferrule 72 des Standardsteckers 71 gegen die Ferrule 75 des erfindungsgemäßen Steckers 74 und damit die Ferrulenhalterung 77 gegen das Ferrulengegenlager 78. Hinsichtlich der übrigen Details und der Funktionsweise des Steckers 74 kann auf die Ausführungen zum Stecker 49 verwiesen werden.

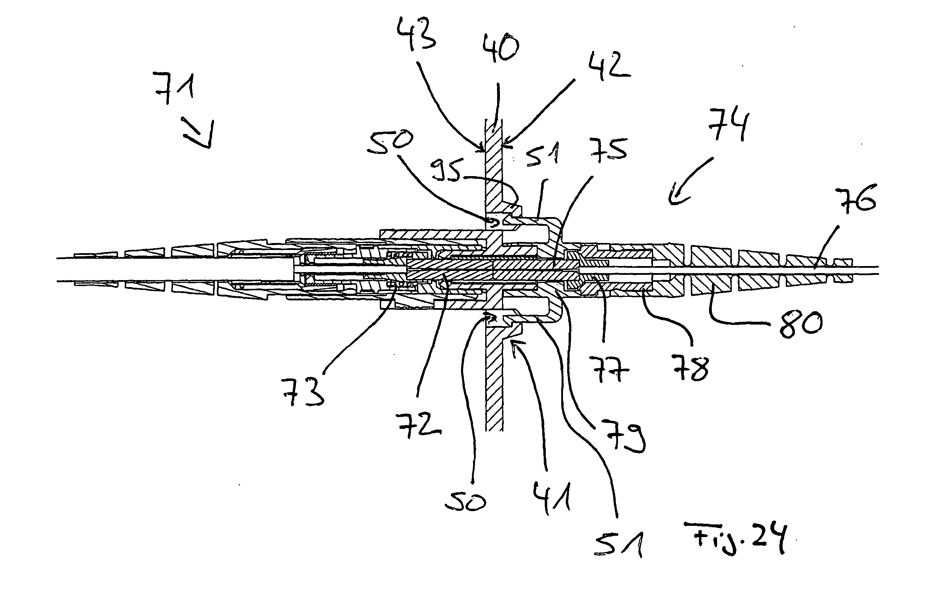

Einen weiteren Stecker 84 für einen Lichtwellenleiter 85 zeigen Fig. 25 bis 30. Dem Lichtwellenleiter 85 ist wiederum eine Ferrule 86 zugeordnet, die als zylindrische Standardferrule ausgebildet ist und in einer Ferrulenhalterung 87 Aufnahme findet. Die Ferrule 86 ist wiederum im Stecker 84 federlos und kugelgelenkartig gelagert, wobei eine kalottenartige Fläche 88 der Ferrulenhalterung 87 mit einer komplementär gewölbten Fläche 89 eines Steckergehäuses 90 zusammenwirkt und für die kugelgelenkartige Lagerung der Ferrule 86 sorgt.

Fig. 28 bis 30 zeigen den Stecker 84 in einer von der Innenseite 42 des Panels 40 aus in die erste Kupplungsöffnung 44 einer Kupplung 41 eingesteckten Position. In dieser Position fixiert wiederum der Stecker 84 die Zentrierungsbuchse ' 47 in der Aufnahme 46 der Kupplung 41.

In Fig. 30 ist der Standardstecker 71 von der Außenseite 43 her in die zweite Kupplungsöffnung 45 der Kupplung 41 eingesteckt, wobei das Federelement 73 des Standardsteckers 71 die Ferrule 72 des Standardsteckers 71 im Sinne des Pfeils 91 gegen die Ferrule 86 des Steckers 84 drückt. Hierdurch kommt wiederum die kalottenartige Fläche 88 der Ferrulenhalterung 87 auf der komplementär gewölbten Fläche 89 des Steckergehäuses 90 zur Anlage. Es können wiederum Schrägstellungen in Folge von auf den Stecker 84 im Sinne des Doppelpfeils 92 einwirkenden Querkräften ausgeglichen werden, da die Ferrule 86 im Sinne des Doppelpfeils 93 eine Seitwärtsbewegung ausführen kann.

## Patentansprüche

1. Stecker (74) für Lichtwellenleiter (76), insbesondere für vorkonfektionierte Lichtwellenleiter (76) wie Patchcords oder Pigtails, mit einem Steckergehäuse zur Aufnahme eines mit einer Ferrule (75) versehenen Lichtwellenleiters, wobei die Ferrule (75) in einer Ferrulenhalterung (77) aufgenommen ist, **dadurch gekennzeichnet dass** im gekoppelten Zustand eine ungefederte kugelgelenkartige Lagerung der Ferrule (75) im Steckergehäuse (79) **dadurch** bereitgestellt wird, dass durch ein Federelement (73) eines gekoppelten Standardsteckers (71), der über seine Ferrule (72) auf die Ferrule (75) des Steckers (74) drückt, eine kalottenförmige Fläche (81) der Ferrulenhalterung (77) gegen eine komplementär geformte Fläche (89) eines Ferrulengegenlagers (78) des Steckers (74) gedrückt wird.

2. Stecker nach Anspruch 1, **dadurch gekennzeichnet, dass** das Steckergehäuse (79) Rastelemente (51) aufweist, die mit Rastelementen einer Kupplung (41) einer Lichtwellenleiteranschlusseinrichtung zusammenwirken, um den Stecker (74) an der Lichtwellenleiteranschlusseinrichtung zu fixieren.

## Claims

1. Plug (74) for optical waveguides (76), in particular for prefabricated optical waveguides (76) such as patchcords or pigtails, having a plug housing for the purpose of accommodating an optical waveguide provided with a ferrule (75), the ferrule (75) being accommodated in a ferrule holder (77), **characterized in that**, in the coupled state, a means of mounting the ferrule (75) in the plug housing (79) unresiliently in the manner of a ball joint is provided as a result of the fact that a dome-shaped surface (81) of the ferrule holder (77) is pressed against a surface (89), having a complementary shape, of an opposing ferrule bearing (78) of the plug (74) by a spring element (73) of a coupled standard plug (71), which presses onto the ferrule (75) of the plug (74) by means of its ferrule (72).

2. Plug according to Claim 1, **characterized in that** the plug housing (79) has latching elements (51) which interact with latching elements on a coupling (41) of an optical waveguide connection device in order to fix the plug (74) to the optical waveguide connection device.

## Revendications

1. Fiche (74) pour fibres optiques (76), notamment pour fibres optiques (76) préconfectionnées telles que des patchcords ou des pigtails, comprenant un boîtier de fiche pour recevoir une fibre optique munie d'une ferrule (75), la ferrule (75) étant accueillie dans un support de ferrule (77), **caractérisée en ce qu'**en situation accouplée, un support de type rotule et sans effet ressort de la ferrule (75) dans le boîtier de fiche (79) est réalisé **en ce qu'**une surface (81) en forme de calotte du support de ferrule (77) est poussée contre une surface (89) de forme complémentaire d'un contre-boutoir de ferrule (78) de la fiche (74) par un élément ressort (73) d'une fiche standard (71) accouplée qui appuie avec sa ferrule (72) sur la ferrule (75) de la fiche (74).

2. Fiche selon la revendication 1, **caractérisée en ce que** le boîtier de fiche (79) présente des éléments d'enclenchement (5) qui agissent conjointement avec des éléments d'enclenchement d'un coupleur (41) d'un dispositif de raccordement pour fibres optiques pour fixer la fiche (74) au dispositif de raccordement pour fibres optiques.
